# EUROPEAN PATENT APPLICATION

(11) **EP 4 722 030 A1**
(43) Date of publication of application: **08.04.2026**
(21) Application number: 23938527.1
(22) Date of filing: 25.05.2023
(51) Int. Cl.: B60L 58/40

(54) **POWER CONTROL SYSTEM FOR RAILWAY VEHICLE, POWER CONTROL METHOD FOR RAILWAY VEHICLE, CONTROL DEVICE FOR RAILWAY VEHICLE, AND PROGRAM**

(71) Applicant: East Japan Railway Company, Tokyo 151-8578 (JP)
(72) Inventor: MURAYAMA, Ken, Tokyo 151-8578 (JP); IIDA, Takayuki, Tokyo 151-8578 (JP)
(74) Representative: Grünecker Patent- und Rechtsanwälte PartG mbB
(86) International application number: PCT/JP2023/019480
(87) International publication number: WO 2024/241565

(57) **Abstract**

The present invention makes it possible to achieve more effective energy output control in a railway vehicle that travels by means of a hybrid power source. This power control system (100) for a railway vehicle comprises: a fuel cell (32) capable of outputting power for driving a main electric motor (50) and an auxiliary apparatus (70) of a railway vehicle (1); a storage battery (22) capable of storing electric charges by means of the output of the main electric motor (50) or the fuel cell (32) and capable of outputting power for driving the main electric motor (50) and the auxiliary apparatus (70) by discharging; and a control device (10) for switching the operation modes of the fuel cell (32) and the storage battery (22) on the basis of the charging rate of the storage battery (22), the speed of the railway vehicle (1), and the cooling water temperature of the fuel cell (32).

## Description

### TECHNICAL FIELD

The present invention relates to a power control system for a railway vehicle, a power control method for a railway vehicle, a control device for a railway vehicle, and a program.

### BACKGROUND ART

In railway vehicles, there has been a known conventional energy control method in a hybrid power source using an energy generator, such as a fuel cell, and an energy storage device.

For example, in Patent Literature 1, it is described that a fuel cell is caused to perform output at its maximum efficiency point until a secondary battery (energy storage device) reaches a state of charge as a charge target, and after the secondary battery reaches the state of charge as the charge target, the secondary battery is discharged to a state of charge as a discharge target and also the output of the fuel cell is lowered to its lowest output value.

Further, in Patent Literature 2, a movable body control device is described, the movable body control device having an electric energy generator and an electric energy storage device and performing electric energy control in accordance with a travel mode.

### CITATION LIST

### Patent Literature

Patent Literature 1: JP 2013-207952 A
Patent Literature 2: JP 4856219 B

### SUMMARY OF INVENTION

### Technical Problem

By the way, in order to further improve the energy efficiency of a railway vehicle during travel, a more efficient output control method in the aforementioned hybrid power source is requested.

An object of the present invention is to provide a power control system for a railway vehicle, a power control method for a railway vehicle, a control device for a railway vehicle and a program each of which can achieve more effective energy output control in a railway vehicle that travels by a hybrid power source.

### Solution to Problem

In order to achieve the aforementioned object, a power control system for a railway vehicle described in claim 1 includes:
a fuel cell capable of outputting power for driving a main electric motor and an auxiliary device of the railway vehicle;
a storage battery capable of being charged with an output of the main electric motor or the fuel cell and capable of outputting the power for driving the main electric motor and the auxiliary device by being discharged; and
a control device for the railway vehicle, the control device switching an operation mode in the fuel cell and the storage battery based on a state of charge of the storage battery, a speed of the railway vehicle, and a cooling water temperature of the fuel cell.

The invention described in claim 2 is the power control system for the railway vehicle according to claim 1, wherein the operation mode includes a first mode in a state in which the speed of the railway vehicle is lower than a predetermined speed and the state of charge of the storage battery is higher than a predetermined threshold value, a second mode in a state in which the speed of the railway vehicle is equal to or higher than the predetermined speed and the state of charge of the storage battery is higher than the predetermined threshold value, a third mode in a state in which the state of charge of the storage battery is equal to or lower than the predetermined threshold value and the cooling water temperature is lower than a predetermined temperature, and a fourth mode in a state in which the state of charge of the storage battery is equal to or lower than the predetermined threshold value and the cooling water temperature is equal to or higher than the predetermined temperature.

The invention described in claim 3 is the power control system for the railway vehicle according to claim 2, wherein during a powering operation of the railway vehicle in the first mode, the control device for the railway vehicle drives the main electric motor and the auxiliary device only by the power output of the fuel cell, and in response to the power output of the fuel cell reaching a maximum output, outputs deficient power by the discharge of the storage battery.

The invention described in claim 4 is the power control system for the railway vehicle according to claim 2, wherein during a stop or a coasting operation of the railway vehicle in the first mode or during the coasting operation of the railway vehicle in the second mode, the control device for the railway vehicle drives the auxiliary device only by the power output of the fuel cell, and in response to consumed power of the auxiliary device exceeding a preset setting value, outputs power for the excess by the discharge of the storage battery.

The invention described in claim 5 is the power control system for the railway vehicle according to claim 2, wherein during a regenerative operation of the railway vehicle, the control device for the railway vehicle drives the auxiliary device only by the power output of the fuel cell, charges the storage battery with the output of the main electric motor, and in response to consumed power of the auxiliary device exceeding a preset setting value, outputs power for the excess from the main electric motor.

The invention described in claim 6 is the power control system for the railway vehicle according to claim 2, wherein during a powering operation of the railway vehicle in the second mode, the control device for the railway vehicle drives the main electric motor and the auxiliary device by the power output of the fuel cell and the power output of the storage battery.

The invention described in claim 7 is the power control system for the railway vehicle according to claim 2, wherein during a powering operation of the railway vehicle in the third mode, the control device for the railway vehicle drives the main electric motor and the auxiliary device by the power output of the fuel cell being a maximum output, among the power output of the fuel cell, stores power not consumed by either the main electric motor or the auxiliary device in the storage battery, and in response to power running short according to the speed of the railway vehicle, outputs power for the shortage by the discharge of the storage battery.

The invention described in claim 8 is the power control system for the railway vehicle according to claim 2, wherein during a stop or a coasting operation of the railway vehicle in the third mode, the control device for the railway vehicle drives the auxiliary device by the power output of the fuel cell being a maximum output, and among the power output of the fuel cell, stores power not consumed by the auxiliary device in the storage battery.

The invention described in claim 9 is the power control system for the railway vehicle according to claim 2, wherein during a powering operation of the railway vehicle in the fourth mode, the control device for the railway vehicle drives the main electric motor and the auxiliary device by the power output of the fuel cell being less than a maximum output, and among the power output of the fuel cell, stores power not consumed by either the main electric motor or the auxiliary device in the storage battery, and in response to power running short according to the speed of the railway vehicle, outputs power for the shortage by the discharge of the storage battery.

The invention described in claim 10 is the power control system for the railway vehicle according to claim 2, wherein during a stop or a coasting operation of the railway vehicle in the fourth mode, the control device for the railway vehicle drives the auxiliary device by the power output of the fuel cell being less than a maximum output, and among the power output of the fuel cell, stores power not consumed by the auxiliary device in the storage battery.

The invention described in claim 11 is the power control system for the railway vehicle according to claim 2, wherein in a case where a current operation mode is the first mode, the control device for the railway vehicle transitions the operation mode to the second mode in response to the state of charge of the storage battery being higher than the predetermined threshold value and the speed of the railway vehicle being equal to or higher than a first speed, and in a case where the current operation mode is the second mode, the control device for the railway vehicle transitions the operation mode to the first mode in response to the state of charge of the storage battery being higher than the predetermined threshold value and the speed of the railway vehicle being lower than a second speed that is slower than the first speed.

The invention described in claim 12 is the power control system for the railway vehicle according to claim 2, wherein in a case where a current operation mode is the first mode or the second mode, the control device for the railway vehicle transitions the operation mode to the third mode or the fourth mode in response to the state of charge of the storage battery being equal to or lower than a first threshold value, and in a case where the current operation mode is the third mode or the fourth mode, the control device for the railway vehicle transitions the operation mode to the first mode or the second mode in response to the state of charge of the storage battery being higher than a second threshold value that is higher than the first threshold value.

The invention described in claim 13 is the power control system for the railway vehicle according to claim 1, including an operation section that receives execution of purging to purge water accumulated in the fuel cell.

The invention described in claim 14 is a power control method for a railway vehicle in the power control system for the railway vehicle according to claim 13, the power control method including:
a purging step of making an instruction to execute the purging via the operation section before turning off a power source of the railway vehicle.

The invention described in claim 15 is a control device for a railway vehicle, the control device controlling a fuel cell capable of outputting power for driving a main electric motor and an auxiliary device of the railway vehicle and a storage battery capable of being charged with an output of the main electric motor or the fuel cell and capable of outputting the power for driving the main electric motor and the auxiliary device by being discharged,
wherein the control device switches an operation mode in the fuel cell and the storage battery based on a state of charge of the storage battery, a speed of the railway vehicle, and a cooling water temperature of the fuel cell.

The invention described in claim 16 is a program causing a computer of a control device for a railway vehicle, the computer controlling a fuel cell capable of outputting power for driving a main electric motor and an auxiliary device of the railway vehicle and a storage battery capable of being charged with an output of the main electric motor or the fuel cell and capable of outputting the power for driving the main electric motor and the auxiliary device by being discharged, to
execute a process of switching an operation mode in the fuel cell and the storage battery based on a state of charge of the storage battery, a speed of the railway vehicle, and a cooling water temperature of the fuel cell.

### Advantageous Effects of Invention

According to the present invention, more effective energy output control can be achieved in a railway vehicle that travels by a hybrid power source.

### BRIEF DESCRIPTION OF DRAWINGS

[FIG. 1] It is a block diagram showing a power control system for a railway vehicle.
[FIG. 2] It is a schematic diagram showing a configuration for power supply in the railway vehicle.
[FIG. 3] It shows a map of operation modes.
[FIG. 4A] It shows power control during a powering operation in A mode.
[FIG. 4B] It shows power control during a stop/coasting operation in the A mode.
[FIG. 4C] It shows power control during a regenerative operation in the A mode.
[FIG. 4D] It shows power control during the powering operation in B mode.
[FIG. 4E] It shows power control during the powering operation in C mode.
[FIG. 4F] It shows power control during the stop/coasting operation in the C mode.
[FIG. 4G] It shows power control during the powering operation in D mode.
[FIG. 4H] It shows power control during the stop/coasting operation in the D mode.
[FIG. 5] It is a flowchart showing the flow of a power control process.

### DESCRIPTION OF EMBODIMENTS

Hereinafter, a power control system 100 for a railway vehicle as an embodiment of the present invention will be described with reference to the drawings. However, the technical scope of the present invention is not limited to the illustrated examples.

### [1. Description of Configuration]

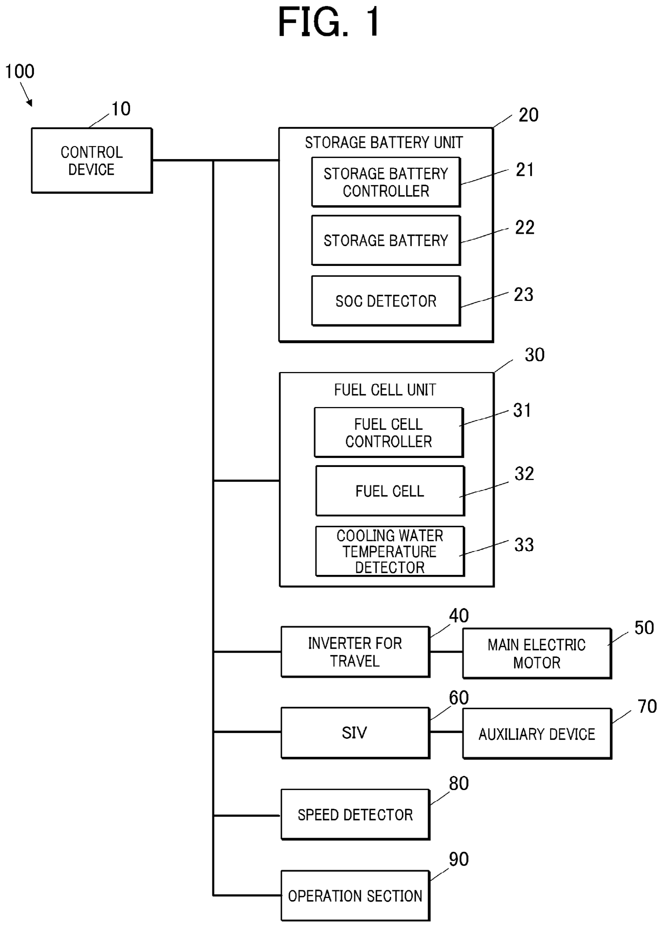

As shown in FIG. 1, the power control system 100 that controls power supply in a railway vehicle 1 includes a control device 10, a storage battery unit 20, a fuel cell unit 30, an inverter for travel 40, a main electric motor 50, a static inverter (SIV) 60, an auxiliary device(s) 70, a speed detector 80, an operation section 90 and so forth.

The control device 10 has a CPU (Central Processing Unit), a ROM (Read Only Memory), and a RAM (Random Access Memory).

The ROM stores a process program necessary for power supply control in the railway vehicle 1.

The RAM temporarily stores data necessary for a process and so forth. This data can be called during the process.

The CPU as a computer processes data in accordance with the process program and executes power control of the power control system 100.

The storage battery unit 20 includes a storage battery controller 21, a storage battery 22, and a SOC (State Of Charge) detector 23.

The storage battery 22 stores power generated by a fuel cell 32 described below and regenerative power output from the main electric motor 50 during a regenerative operation (deceleration). Further, the storage battery 22 outputs DC power.

The storage battery 22 is, for example, a lithium-ion secondary battery, a nickel-hydrogen storage cell, an electric double layer capacitor, a lithium-ion capacitor or the like.

The SOC detector 23 detects the state of charge (SOC) of the storage battery 22.

The storage battery controller 21 outputs the SOC of the storage battery 22 detected by the SOC detector 23 to the control device 10. Further, the storage battery controller 21 controls the operation of the storage battery unit 20.

The fuel cell unit 30 includes a fuel cell controller 31, the fuel cell 32, a cooling water temperature detector 33 and so forth.

The fuel cell 32 in this embodiment generates DC power through an electrochemical reaction between hydrogen and oxygen in the air.

The cooling water temperature detector 33 detects the temperature (cooling water temperature) of cooling water that cools the fuel cell 32.

The fuel cell controller 31 outputs the cooling water temperature detected by the cooling water temperature detector 33 to the control device 10. Further, the fuel cell controller 31 controls the operation of the fuel cell unit 30.

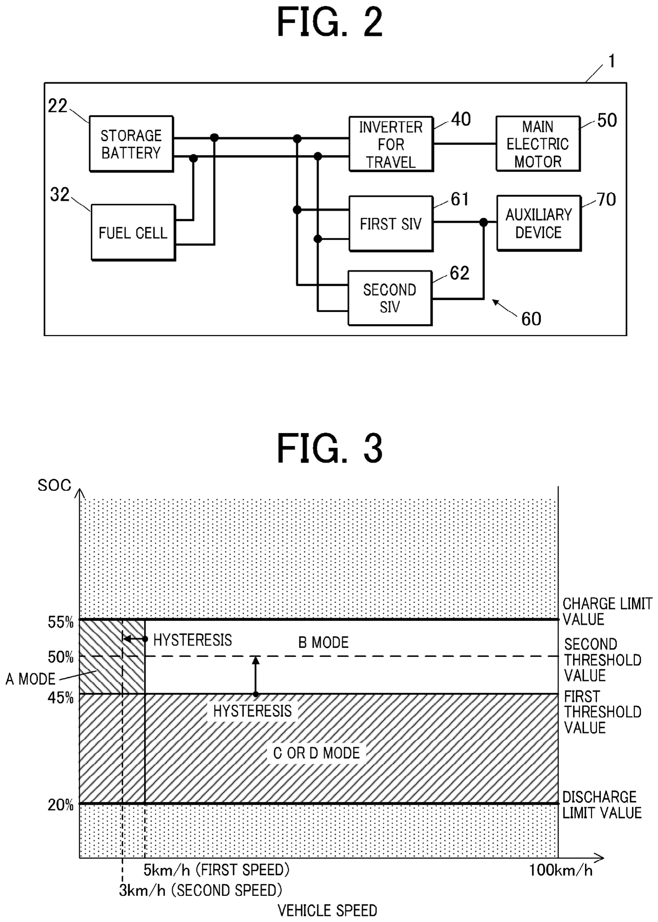

As shown in FIG. 2, the inverter for travel 40 is connected to the storage battery 22 and the fuel cell 32, and converts the DC power supplied from the storage battery 22 or the fuel cell 32 into AC power and outputs the AC power to the main electric motor 50.

The main electric motor 50 is a drive source for causing the railway vehicle 1 to travel. The AC power is supplied to the main electric motor 50 from the inverter for travel 40 to drive drive wheels (not shown) of the railway vehicle 1.

The SIV 60 is an auxiliary power source device and, as shown in FIG. 2, includes a first SIV 61 and a second SIV 62.

The first SIV 61 and the second SIV 62 are each connected in parallel with a type(s) of various types of auxiliary device 70 of the railway vehicle 1, such as an electric compressor and/or a lighting fixture.

Further, the first SIV 61 and the second SIV 62 are each connected in parallel with the storage battery 22 and the fuel cell 32.

The first SIV 61 and the second SIV 62 are controlled by the control device 10 such that they do not operate simultaneously. In other words, either the first SIV 61 or the second SIV 62 converts the power supplied from the storage battery 22 or the fuel cell 32 and outputs it to the auxiliary device 70.

For example, the first SIV 61 is operated to convert the power supplied from the storage battery 22 or the fuel cell 32 and output it to the auxiliary device 70. Then, the second SIV 62 is on standby (no-load idle operation (output is 0 kW)). In this case, when the first SIV 61 stops due to failure, the second SIV 62, which has been on standby, is operated to continue to output the power supplied from the storage battery 22 or the fuel cell 32 to the auxiliary device 70.

The SIV 60 may include only the first SIV 61 or the second SIV 62.

The speed detector 80, for example, detects the speed of the railway vehicle 1 on the basis of the rotation speed of the drive wheels of the railway vehicle 1 and outputs the detected speed of the railway vehicle 1 to the control device 10.

The operation section 90 is an operating means with which a user (e.g., an occupant of the railway vehicle 1) makes various operations.

The operation section 90 outputs operation signals to the control device 10 in accordance with the contents of operations made by the user.

More specifically, the operation section 90 receives execution of purging to discharge water accumulated in the fuel cell 32.

Before turning off a vehicle power source of the railway vehicle 1, the user executes a purging step of making an instruction to execute purging via the operation section 90. The control device 10 having received the instruction to execute purging discharges the water accumulated in the fuel cell 32.

This can prevent, in a case where the atmospheric temperature is low, the water accumulated in the fuel cell 32 from freezing after the railway vehicle 1 stops.

### [2. Description of Operation]

### [2-1. Description of Operation Mode]

Next, operation modes in the power control system 100 will be described.

The computer of the control device 10 executes a process of switching an operation mode in the power control system 100.

The operation mode includes A mode as a first mode, B mode as a second mode, C mode as a third mode, and D mode as a fourth mode.

FIG. 3 shows a map of operation modes.

The A mode is an operation mode in a state in which the vehicle speed of the railway vehicle 1 is lower than a predetermined speed and the state of charge of the storage battery 22 is sufficient (SOC of the storage battery 22 is higher than a predetermined threshold value).

The aforementioned predetermined speed is a first speed (e.g., 5 km/h) or a second speed (e.g., 3 km/h). The second speed is a speed slower than the first speed.

The aforementioned predetermined threshold value is a first threshold value (e.g., 45%) or a second threshold value (e.g., 50%). The second threshold value is a value higher than the first threshold value.

The upper limit value (charge limit value) of the SOC of the storage battery 22 is less than 100%, for example, 55%. If the SOC of the storage battery 22 continues to be maintained at 100%, the storage battery 22 deteriorates and the life of the storage battery 22 shortens. The upper limit value of the SOC of the storage battery 22 being less than 100% can prevent the storage battery 22 from deteriorating.

The B mode is an operation mode in a state in which the vehicle speed of the railway vehicle 1 is equal to or higher than the predetermined speed (first speed or second speed) and the state of charge of the storage battery 22 is sufficient (SOC of the storage battery 22 is higher than the predetermined threshold value (first threshold value or second threshold value)).

The C mode is an operation mode in a state in which the state of charge of the storage battery 22 is insufficient (SOC of the storage battery 22 is equal to or lower than the predetermined threshold value (first threshold value or second threshold value)) and the cooling water temperature for cooling the fuel cell 32 is lower than a predetermined temperature (e.g., 90°C).

The lower limit value (discharge limit value) of the SOC of the storage battery 22 is, for example, 20%.

The D mode is an operation mode in a state in which the state of charge of the storage battery 22 is insufficient (SOC of the storage battery 22 is equal to or lower than the predetermined threshold value (first threshold value or second threshold value)) and the cooling water temperature for cooling the fuel cell 32 is equal to or higher than the predetermined temperature (e.g., 90°C).

Hereinafter, power control in each operation mode will be described.

In the following description, an SIV (operating SIV) that outputs power supplied from the storage battery 22 or the fuel cell 32 to the auxiliary device 70 is the first SIV 61, and an SIV (standby SIV) that is on standby (no-load idle operation) is the second SIV 62. The operating SIV may be the second SIV 62, and the standby SIV may be the first SIV 61.

### [2-1-1. A Mode]

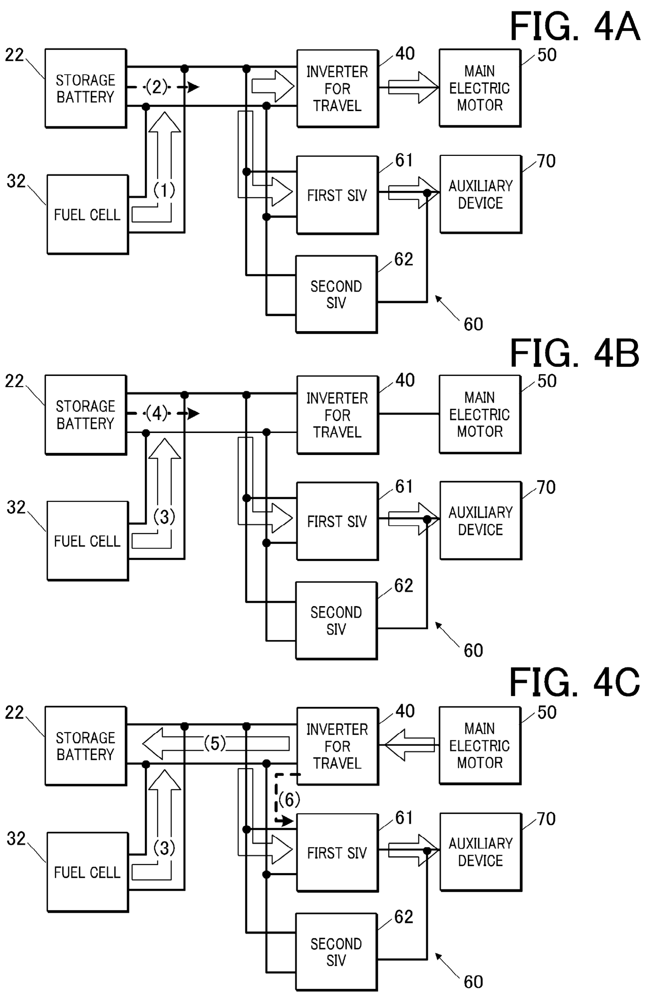

FIG. 4A shows power control in a case where the operation mode is the A mode and the railway vehicle 1 performs a powering operation.

As shown in FIG. 4A, during the startup of the railway vehicle 1, only the fuel cell 32 supplies power to the inverter for travel 40 and the first SIV 61 (1).

Thereafter, the power output of the fuel cell 32 is increased according to the acceleration of the railway vehicle 1, and when the power output of the fuel cell 32 reaches its maximum output, deficient power is supplied from the storage battery 22 (2). The maximum output of the fuel cell 32 is, for example, 120 kW.

FIG. 4B shows power control in a case where the operation mode is the A mode and the railway vehicle 1 stops or performs a coasting operation.

As shown in FIG. 4B, the fuel cell 32 supplies power to the first SIV 61 (3).

However, when consumed power of the auxiliary device 70 exceeds a preset setting value due to, for example, a sudden change in the load on the auxiliary device 70, which is connected to the first SIV 61, power for the excess is supplied from the storage battery 22 (4).

FIG. 4C shows power control in a case where the operation mode is the A mode and the railway vehicle 1 performs a regenerative operation.

As shown in FIG. 4C, as in FIG. 4B, the fuel cell 32 supplies power to the first SIV 61 (3).

The storage battery 22 stores regenerative power generated by using the main electric motor 50 as a generator (5).

However, when the load on the first SIV 61 changes suddenly, such as when a compressor connected to the first SIV 61 is started, i.e., when the consumed power of the auxiliary device 70 exceeds the preset setting value, power for the excess is borne by the regenerative power that is output from the main electric motor 50 (6).

The lower limit value (e.g., 16 kW) of the power output of the fuel cell 32 in the case where the operation mode is the A mode is equivalent to the consumed power value of the first SIV 61.

Thus, in a case where the operation mode is the A mode for a long period of time, causing the fuel cell 32 to operate such that the power output of the fuel cell 32 during the stop of the railway vehicle 1 is the lower limit value can prevent the SOC of the storage battery 22 from increasing more than necessary.

### [2-1-2. B Mode]

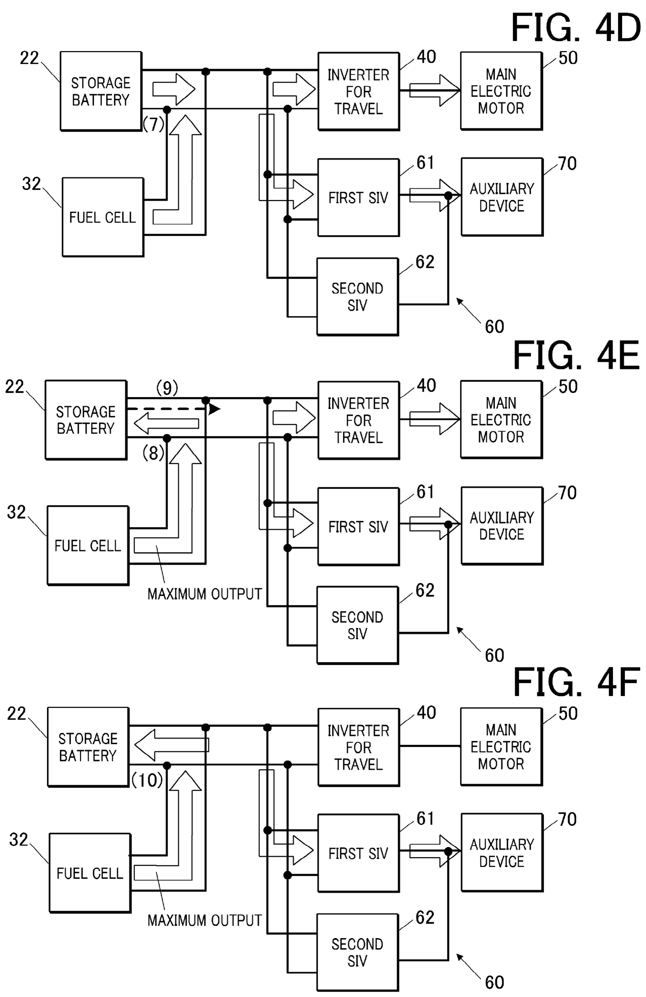

FIG. 4D shows power control in a case where the operation mode is the B mode and the railway vehicle 1 performs the powering operation.

As shown in FIG. 4D, the storage battery 22 and the fuel cell 32 supply power to the inverter for travel 40 and the first SIV 61 (7).

Power control in a case where the operation mode is the B mode and the railway vehicle 1 performs the coasting operation is the same as that in the case where the operation mode is the A mode and the railway vehicle 1 stops or performs the coasting operation, which is shown in FIG. 4B.

In a case where the operation mode is the B mode, the railway vehicle 1 performs the powering operation or the coasting operation, and the consumed power value of the first SIV 61 is smaller than the lower limit value (e.g., 16 kW) of the power output of the fuel cell 32, the fuel cell 32 continues supplying power at the lower limit value of the output.

This can quickly increase the power output of the fuel cell 32 during the next powering operation.

Power control in a case where the operation mode is the B mode and the railway vehicle 1 performs the regenerative operation is the same as that in the case where the operation mode is the A mode and the railway vehicle 1 performs the regenerative operation, which is shown in FIG. 4C.

### [2-1-3. C Mode]

FIG. 4E shows power control in a case where the operation mode is the C mode and the railway vehicle 1 performs the powering operation.

As shown in FIG. 4E, during the startup of the railway vehicle 1, only the fuel cell 32 supplies power to the inverter for travel 40 and the first SIV 61. The power output of the fuel cell 32 in this case is the maximum output. Among the power supplied from the fuel cell 32, power (surplus) not consumed by either the inverter for travel 40 or the first SIV 61 is stored in the storage battery 22 (8).

Thereafter, when power runs short according to the acceleration of the railway vehicle 1, power for the shortage is supplied from the storage battery 22 (9).

FIG. 4F shows power control in a case where the operation mode is the C mode and the railway vehicle 1 stops or performs the coasting operation.

As shown in FIG. 4F, the fuel cell 32 supplies power to the first SIV 61. The power output of the fuel cell 32 in this case is the maximum output. Among the power supplied from the fuel cell 32, power (surplus) not consumed by the first SIV 61 is stored in the storage battery 22 (10).

Power control in a case where the operation mode is the C mode and the railway vehicle 1 performs the regenerative operation is the same as that in the case where the operation mode is the A mode and the railway vehicle 1 performs the regenerative operation, which is shown in FIG. 4C.

### [2-1-3. D Mode]

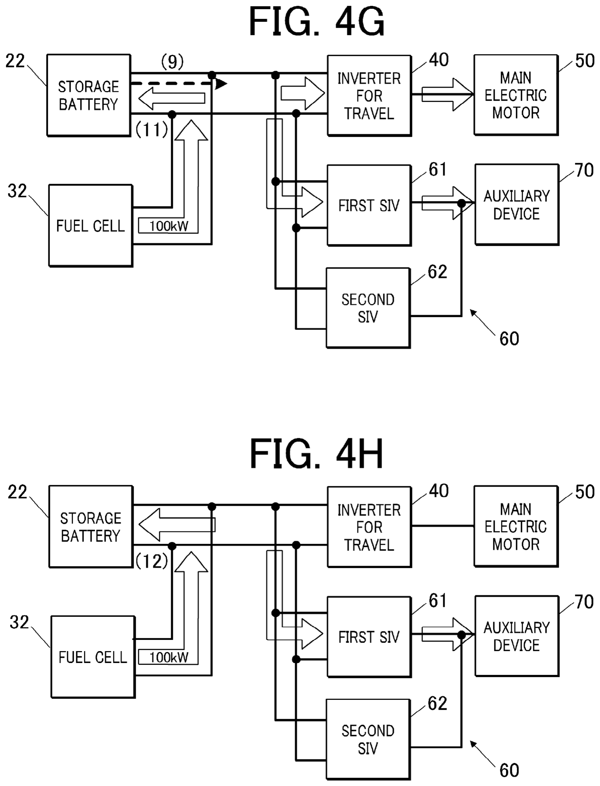

FIG. 4G shows power control in a case where the operation mode is the D mode and the railway vehicle 1 performs the powering operation.

As shown in FIG. 4G, during the startup of the railway vehicle 1, only the fuel cell 32 supplies power to the inverter for travel 40 and the first SIV 61. The power output of the fuel cell 32 in this case is less (e.g., 100 kW) than the maximum output. In other words, the power output of the fuel cell 32 being less than the maximum output can lower the heating value of the fuel cell 32 and lower the cooling water temperature. The cooling water temperature thus being lower than the predetermined temperature (e.g., 90°C) can increase the power generation efficiency of the fuel cell 32. Therefore, more effective energy output control can be achieved in the power control system 100. Among the power supplied from the fuel cell 32, power (surplus) not consumed by either the inverter for travel 40 or the first SIV 61 is stored in the storage battery 22 (11).

Thereafter, when power runs short according to the acceleration of the railway vehicle 1, power for the shortage is supplied from the storage battery 22 (9).

FIG. 4H shows power control in a case where the operation mode is the D mode and the railway vehicle 1 stops or performs the coasting operation.

As shown in FIG. 4H, the fuel cell 32 supplies power to the first SIV 61. The power output of the fuel cell 32 in this case is less (e.g., 100 kW) than the maximum output. In other words, the output of the fuel cell 32 being less than the maximum output can lower the heating value of the fuel cell 32 and lower the cooling water temperature. The cooling water temperature thus being lower than the predetermined temperature (e.g., 90°C) can increase the power generation efficiency of the fuel cell 32. Therefore, more effective energy output control can be achieved in the power control system 100. Among the power supplied from the fuel cell 32, power (surplus) not consumed by the first SIV 61 is stored in the storage battery 22 (12).

Power control in a case where the operation mode is the D mode and the railway vehicle 1 performs the regenerative operation is the same as that in the case where the operation mode is the A mode and the railway vehicle 1 performs the regenerative operation, which is shown in FIG. 4C.

### [2-2. Power Control Process]

Next, a power control process that is executed by the control device 10 will be described.

The power control process is a process of switching the operation mode in the fuel cell 32 and the storage battery 22 on the basis of the state of charge of the storage battery 22, the speed of the railway vehicle 1, and the cooling water temperature of the fuel cell 32.

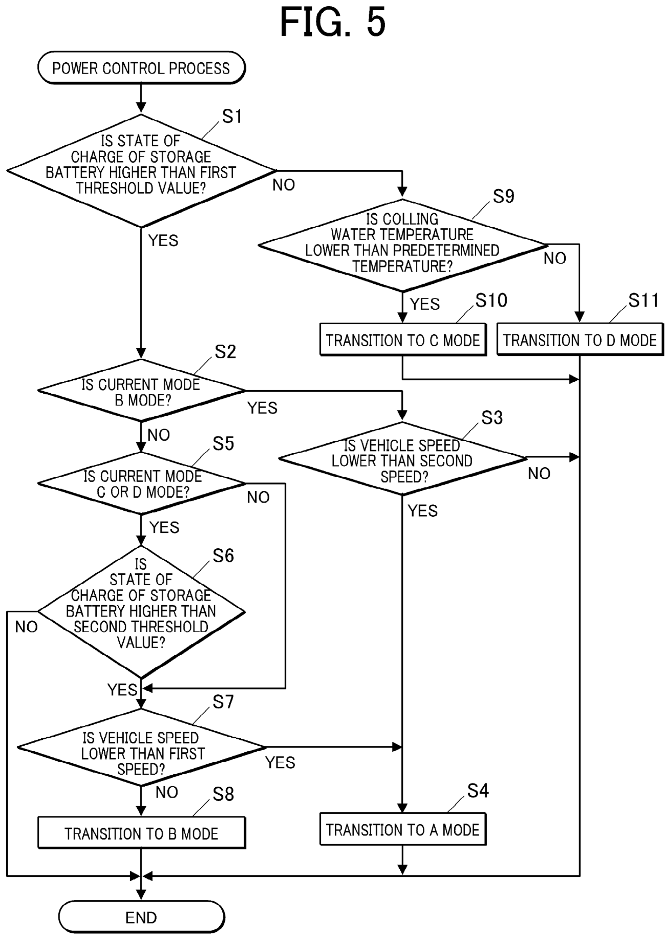

FIG. 5 is a flowchart showing the power control process.

First, the control device 10 determines whether the SOC of the storage battery 22 detected by the SOC detector 23 is higher than the first threshold value (e.g., 45%) (Step S1).

If the SOC of the storage battery 22 is higher than the first threshold value (Step S1; YES), the control device 10 determines whether the current operation mode is the B mode (Step S2).

If the current operation mode is the B mode (Step S2; YES), the control device 10 determines whether the speed of the railway vehicle 1 detected by the speed detector 80 is lower than the second speed (e.g., 3 km/h) (Step S3).

If the speed of the railway vehicle 1 is lower than the second speed (Step S3; YES), the control device 10 transitions the operation mode to the A mode (Step S4) and ends this process.

On the other hand, if the speed of the railway vehicle 1 is equal to or higher than the second speed (Step S3; NO), the control device 10 ends this process. In this case, the operation mode remains in the B mode.

If the current operation mode is not the B mode (Step S2; NO), the control device 10 determines whether the current operation mode is the C mode or the D mode (Step S5).

If the current operation mode is the C mode or D mode (Step S5; YES), the control device 10 determines whether the SOC of the storage battery 22 detected by the SOC detector 23 is higher than the second threshold value (e.g., 50%) (Step S6).

If the SOC of the storage battery 22 is higher than the second threshold value (Step S6; YES), the control device 10 determines whether the speed of the railway vehicle 1 is lower than the first speed (e.g., 5 km/h) (Step S7).

If the speed of the railway vehicle 1 is lower than the first speed (Step S7; YES), the control device 10 moves this process to Step S4 (transitions the operation mode to the A mode).

On the other hand, if the speed of the railway vehicle 1 is equal to or higher than the first speed (Step S7; NO), the control device 10 transitions the operation mode to the B mode (Step S8) and ends this process.

If the SOC of the storage battery 22 is equal to or lower than the second threshold value (Step S6; NO), the control device 10 ends this process. In this case, the operation mode remains in the C mode or the D mode.

If the current operation mode is neither the C mode nor the D mode (Step S5; NO), i.e., if the operation mode is the A mode, the control device 10 moves this process to Step S7.

If the SOC of the storage battery 22 is equal to or lower than the first threshold value (Step S1; NO), the control device 10 determines whether the cooling water temperature detected by the cooling water temperature detector 33 is lower than the predetermined temperature (e.g., 90°C) (Step S9).

If the cooling water temperature is lower than the predetermined temperature (Step S9; YES), the control device 10 transitions the operation mode to the C mode (Step S10) and ends this process.

On the other hand, if the cooling water temperature is equal to or higher than the predetermined temperature (Step S9; NO), the control device 10 transitions the operation mode to the D mode (Step S10) and ends this process.

Thus, in the power control process, as described above, the vehicle speed of the railway vehicle 1 in the case of the transition from the B mode to the A mode has a predetermined hysteresis (e.g., -2 km/h) with respect to the vehicle speed of the railway vehicle 1 in the case of the transition from the A mode to the B mode.

Further, the SOC of the storage battery 22 in the case of the transition from the C mode or the D mode to the A mode or the B mode has a predetermined hysteresis (e.g., +5%) with respect to the SOC of the storage battery 22 in the case of the transition from the A mode or the B mode to the C mode or the D mode.

### [3. Description of Advantageous Effects]

As described above, the power control system 100 for a railway vehicle(s) includes the fuel cell 32 capable of outputting power for driving the main electric motor 50 and the auxiliary device 70 of the railway vehicle 1, the storage battery 22 capable of being charged with the output of the main electric motor 50 or the fuel cell 32 and capable of outputting the power for driving the main electric motor 50 and the auxiliary device 70 by being discharged, and the control device 10 for the railway vehicle, the control device 10 switching the operation mode in the fuel cell 32 and the storage battery 22 on the basis of the state of charge of the storage battery 22, the speed of the railway vehicle 1, and the cooling water temperature of the fuel cell 32.

Thus, energy output can be controlled by the operation mode based on the state of charge of the storage battery 22, the speed of the railway vehicle 1 and the cooling water temperature of the fuel cell 32. Therefore, more effective energy output control can be achieved in the railway vehicle 1 that travels by a hybrid power source.

Further, in the power control system 100 for the railway vehicle of this embodiment, the operation mode includes the first mode (A mode) in the state in which the speed of the railway vehicle 1 is lower than the predetermined speed and the state of charge of the storage battery 22 is higher than the predetermined threshold value, the second mode (B mode) in the state in which the speed of the railway vehicle 1 is equal to or higher than the predetermined speed and the state of charge of the storage battery 22 is higher than the predetermined threshold value, the third mode (C mode) in the state in which the state of charge of the storage battery 22 is equal to or lower than the predetermined threshold value and the cooling water temperature is lower than the predetermined temperature, and the fourth mode (D mode) in the state in which the state of charge of the storage battery 22 is equal to or lower than the predetermined threshold value and the cooling water temperature is equal to or higher than the predetermined temperature.

Thus, energy output can be controlled by the operation mode suitable for the state of charge of the storage battery 22, the speed of the railway vehicle 1, and the cooling water temperature of the fuel cell 32.

Further, in the power control system 100 for the railway vehicle of this embodiment, during the powering operation of the railway vehicle 1 in the first mode, the control device 10 for the railway vehicle drives the main electric motor 50 and the auxiliary device 70 only by the power output of the fuel cell 32, and in response to the power output of the fuel cell 32 reaching the maximum output, outputs deficient power by the discharge of the storage battery 22.

Thus, outputting deficient power by discharging the storage battery 22 can suppress power shortage.

Further, in the power control system 100 for the railway vehicle of this embodiment, during the stop or the coasting operation of the railway vehicle 1 in the first mode or during the coasting operation of the railway vehicle 1 in the second mode, the control device 10 for the railway vehicle drives the auxiliary device 70 only by the power output of the fuel cell 32, and in response to the consumed power of the auxiliary device 70 exceeding the preset setting value, outputs power for the excess by the discharge of the storage battery 22.

Thus, outputting power for the excess by discharging the storage battery 22 can suppress power shortage.

Further, in the power control system 100 for the railway vehicle of this embodiment, during the regenerative operation of the railway vehicle 1, the control device 10 for the railway vehicle drives the auxiliary device 70 only by the power output of the fuel cell 32, charges the storage battery 22 with the output of the main electric motor 50, and in response to the consumed power of the auxiliary device 70 exceeding the preset setting value, outputs power for the excess from the main electric motor 50.

In a case where the main electric motor 50 is not driven, such as during the stop of the railway vehicle 1, outputting power from the fuel cell 32 preferentially can suppress a decrease in the state of charge of the storage battery 22.

Further, in the power control system 100 for the railway vehicle of this embodiment, during the powering operation of the railway vehicle 1 in the second mode, the control device 10 for the railway vehicle drives the main electric motor 50 and the auxiliary device 70 by the power output of the fuel cell 32 and the power output of the storage battery 22.

Since the load on the main electric motor 50 is relatively large in the case where the speed of the railway vehicle 1 is equal to or higher than the predetermined speed and the railway vehicle 1 performs the powering operation, outputting power from the fuel cell 32 and the storage battery 22 can suppress power shortage.

Further, in the power control system 100 for the railway vehicle of this embodiment, during the powering operation of the railway vehicle 1 in the third mode, the control device 10 for the railway vehicle drives the main electric motor 50 and the auxiliary device 70 by the power output of the fuel cell 32 being the maximum output, among the power output of the fuel cell 32, stores power not consumed by either the main electric motor 50 or the auxiliary device 70 in the storage battery 22, and in response to power running short according to the speed of the railway vehicle 1, outputs power for the shortage by the discharge of the storage battery 22.

Thus, the storage battery 22 can be charged while the main electric motor 50 and the auxiliary device 70 are driven. Further, outputting power for the shortage from the storage battery 22 can suppress power shortage.

Further, in the power control system 100 for the railway vehicle of this embodiment, during the stop or the coasting operation of the railway vehicle 1 in the third mode, the control device 10 for the railway vehicle drives the auxiliary device 70 by the power output of the fuel cell 32 being the maximum output, and among the power output of the fuel cell 32, stores power not consumed by the auxiliary device 70 in the storage battery 22.

Thus, the storage battery 22 can be charged while the main electric motor 50 and the auxiliary device 70 are driven.

Further, in the power control system 100 for the railway vehicle of this embodiment, during the powering operation of the railway vehicle 1 in the fourth mode, the control device 10 for the railway vehicle drives the main electric motor 50 and the auxiliary device 70 by the power output of the fuel cell 32 being less than the maximum output, and among the power output of the fuel cell 32, stores power not consumed by either the main electric motor 50 or the auxiliary device 70 in the storage battery 22, and in response to power running short according to the speed of the railway vehicle 1, outputs power for the shortage by the discharge of the storage battery 22.

The power output of the fuel cell 32 being less than the maximum output can lower the heating value of the fuel cell 32 and lower the cooling water temperature. The cooling water temperature being lower than the predetermined temperature (e.g., 90°C) can increase the power generation efficiency of the fuel cell 32. Therefore, more effective energy output control can be achieved in the power control system 100.

Further, the storage battery 22 can be charged while the main electric motor 50 and the auxiliary device 70 are driven. Still further, outputting power for the shortage from the storage battery 22 can suppress power shortage.

Further, in the power control system 100 for the railway vehicle of this embodiment, during the stop or the coasting operation of the railway vehicle 1 in the fourth mode, the control device 10 for the railway vehicle drives the auxiliary device 70 by the power output of the fuel cell 32 being less than the maximum output, and among the power output of the fuel cell 32, stores power not consumed by the auxiliary device 70 in the storage battery 22.

The power output of the fuel cell 32 being less than the maximum output can lower the heating value of the fuel cell 32 and lower the cooling water temperature. The cooling water temperature being lower than the predetermined temperature (e.g., 90°C) can increase the power generation efficiency of the fuel cell 32. Therefore, more effective energy output control can be achieved in the power control system 100.

Further, the storage battery 22 can be charged while the main electric motor 50 and the auxiliary device 70 are driven.

Further, in the power control system 100 for the railway vehicle of this embodiment, in the case where the current operation mode is the first mode, the control device 10 for the railway vehicle transitions the operation mode to the second mode in response to the state of charge of the storage battery 22 being higher than the predetermined threshold value and the speed of the railway vehicle 1 being equal to or higher than the first speed, and in the case where the current operation mode is the second mode, the control device 10 for the railway vehicle transitions the operation mode to the first mode in response to the state of charge of the storage battery 22 being higher than the predetermined threshold value and the speed of the railway vehicle 1 being lower than the second speed that is slower than the first speed.

Thus, the vehicle speed of the railway vehicle 1 in the case of the transition from the second mode to the first mode can have the predetermined hysteresis (e.g., -2 km/h) with respect to the vehicle speed of the railway vehicle 1 in the case of the transition from the first mode to the second mode. This can prevent power shortage during the powering operation.

Further, in the power control system 100 for the railway vehicle of this embodiment, in the case where the current operation mode is the first mode or the second mode, the control device 10 for the railway vehicle transitions the operation mode to the third mode or the fourth mode in response to the state of charge of the storage battery 22 being equal to or lower than the first threshold value, and in the case where the current operation mode is the third mode or the fourth mode, the control device 10 for the railway vehicle transitions the operation mode to the first mode or the second mode in response to the state of charge of the storage battery 22 being higher than the second threshold value that is higher than the first threshold value.

Thus, the SOC of the storage battery 22 in the case of the transition from the third mode or the fourth mode to the first mode or the second mode can have the predetermined hysteresis (e.g., +5%) with respect to the SOC of the storage battery 22 in the case of the transition from the first mode or the second mode to the third mode or the fourth mode. This can prevent the state of charge of the storage battery 22 from decreasing more than necessary.

Further, the power control system 100 for the railway vehicle of this embodiment includes the operation section 90 that receives execution of purging to purge water accumulated in the fuel cell 32.

Further, the power control method for a railway vehicle(s) of this embodiment includes the purging step of making an instruction to execute purging via the operation section 90 before turning off the power source of the railway vehicle 1.

These can prevent, in the case where the atmospheric temperature is low, the water accumulated in the fuel cell 32 from freezing after the railway vehicle 1 stops.

Embodiments to which the present invention is applicable are not limited to the one described above, and appropriate changes can be made without departing from the scope of the present invention.

### Industrial Applicability

This invention is applicable to a power control system for a railway vehicle, a power control method for a railway vehicle, a control device for a railway vehicle, and a program.

### Reference Signs List

- 1: Railway Vehicle
- 100: Power Control System
- 10: Control Device
- 20: Storage Battery Unit
- 21: Storage Battery Controller
- 22: Storage Battery
- 23: SOC Detector
- 30: Fuel Cell Unit
- 31: Fuel Cell Controller
- 32: Fuel Cell
- 33: Cooling Water Temperature Detector
- 40: Inverter for Travel
- 50: Main Electric Motor
- 60: SIV
- 61: First SIV
- 62: Second SIV
- 70: Auxiliary Device
- 80: Speed Detector
- 90: Operation Section

## Claims

1. A power control system for a railway vehicle, comprising:
a fuel cell capable of outputting power for driving a main electric motor and an auxiliary device of the railway vehicle;
a storage battery capable of being charged with an output of the main electric motor or the fuel cell and capable of outputting the power for driving the main electric motor and the auxiliary device by being discharged; and
a control device for the railway vehicle, the control device switching an operation mode in the fuel cell and the storage battery based on a state of charge of the storage battery, a speed of the railway vehicle, and a cooling water temperature of the fuel cell.

2. The power control system for the railway vehicle according to claim 1, wherein the operation mode includes a first mode in a state in which the speed of the railway vehicle is lower than a predetermined speed and the state of charge of the storage battery is higher than a predetermined threshold value, a second mode in a state in which the speed of the railway vehicle is equal to or higher than the predetermined speed and the state of charge of the storage battery is higher than the predetermined threshold value, a third mode in a state in which the state of charge of the storage battery is equal to or lower than the predetermined threshold value and the cooling water temperature is lower than a predetermined temperature, and a fourth mode in a state in which the state of charge of the storage battery is equal to or lower than the predetermined threshold value and the cooling water temperature is equal to or higher than the predetermined temperature.

3. The power control system for the railway vehicle according to claim 2, wherein during a powering operation of the railway vehicle in the first mode, the control device for the railway vehicle drives the main electric motor and the auxiliary device only by the power output of the fuel cell, and in response to the power output of the fuel cell reaching a maximum output, outputs deficient power by the discharge of the storage battery.

4. The power control system for the railway vehicle according to claim 2, wherein during a stop or a coasting operation of the railway vehicle in the first mode or during the coasting operation of the railway vehicle in the second mode, the control device for the railway vehicle drives the auxiliary device only by the power output of the fuel cell, and in response to consumed power of the auxiliary device exceeding a preset setting value, outputs power for the excess by the discharge of the storage battery.

5. The power control system for the railway vehicle according to claim 2, wherein during a regenerative operation of the railway vehicle, the control device for the railway vehicle drives the auxiliary device only by the power output of the fuel cell, charges the storage battery with the output of the main electric motor, and in response to consumed power of the auxiliary device exceeding a preset setting value, outputs power for the excess from the main electric motor.

6. The power control system for the railway vehicle according to claim 2, wherein during a powering operation of the railway vehicle in the second mode, the control device for the railway vehicle drives the main electric motor and the auxiliary device by the power output of the fuel cell and the power output of the storage battery.

7. The power control system for the railway vehicle according to claim 2, wherein during a powering operation of the railway vehicle in the third mode, the control device for the railway vehicle drives the main electric motor and the auxiliary device by the power output of the fuel cell being a maximum output, among the power output of the fuel cell, stores power not consumed by either the main electric motor or the auxiliary device in the storage battery, and in response to power running short according to the speed of the railway vehicle, outputs power for the shortage by the discharge of the storage battery.

8. The power control system for the railway vehicle according to claim 2, wherein during a stop or a coasting operation of the railway vehicle in the third mode, the control device for the railway vehicle drives the auxiliary device by the power output of the fuel cell being a maximum output, and among the power output of the fuel cell, stores power not consumed by the auxiliary device in the storage battery.

9. The power control system for the railway vehicle according to claim 2, wherein during a powering operation of the railway vehicle in the fourth mode, the control device for the railway vehicle drives the main electric motor and the auxiliary device by the power output of the fuel cell being less than a maximum output, and among the power output of the fuel cell, stores power not consumed by either the main electric motor or the auxiliary device in the storage battery, and in response to power running short according to the speed of the railway vehicle, outputs power for the shortage by the discharge of the storage battery.

10. The power control system for the railway vehicle according to claim 2, wherein during a stop or a coasting operation of the railway vehicle in the fourth mode, the control device for the railway vehicle drives the auxiliary device by the power output of the fuel cell being less than a maximum output, and among the power output of the fuel cell, stores power not consumed by the auxiliary device in the storage battery.

11. The power control system for the railway vehicle according to claim 2, wherein in a case where a current operation mode is the first mode, the control device for the railway vehicle transitions the operation mode to the second mode in response to the state of charge of the storage battery being higher than the predetermined threshold value and the speed of the railway vehicle being equal to or higher than a first speed, and in a case where the current operation mode is the second mode, the control device for the railway vehicle transitions the operation mode to the first mode in response to the state of charge of the storage battery being higher than the predetermined threshold value and the speed of the railway vehicle being lower than a second speed that is slower than the first speed.

12. The power control system for the railway vehicle according to claim 2, wherein in a case where a current operation mode is the first mode or the second mode, the control device for the railway vehicle transitions the operation mode to the third mode or the fourth mode in response to the state of charge of the storage battery being equal to or lower than a first threshold value, and in a case where the current operation mode is the third mode or the fourth mode, the control device for the railway vehicle transitions the operation mode to the first mode or the second mode in response to the state of charge of the storage battery being higher than a second threshold value that is higher than the first threshold value.

13. The power control system for the railway vehicle according to claim 1, comprising an operation section that receives execution of purging to purge water accumulated in the fuel cell.

14. A power control method for a railway vehicle in the power control system for the railway vehicle according to claim 13, the power control method comprising:
a purging step of making an instruction to execute the purging via the operation section before turning off a power source of the railway vehicle.

15. A control device for a railway vehicle, the control device controlling a fuel cell capable of outputting power for driving a main electric motor and an auxiliary device of the railway vehicle and a storage battery capable of being charged with an output of the main electric motor or the fuel cell and capable of outputting the power for driving the main electric motor and the auxiliary device by being discharged,
wherein the control device switches an operation mode in the fuel cell and the storage battery based on a state of charge of the storage battery, a speed of the railway vehicle, and a cooling water temperature of the fuel cell.

16. A program causing a computer of a control device for a railway vehicle, the computer controlling a fuel cell capable of outputting power for driving a main electric motor and an auxiliary device of the railway vehicle and a storage battery capable of being charged with an output of the main electric motor or the fuel cell and capable of outputting the power for driving the main electric motor and the auxiliary device by being discharged, to
execute a process of switching an operation mode in the fuel cell and the storage battery based on a state of charge of the storage battery, a speed of the railway vehicle, and a cooling water temperature of the fuel cell.
